# EUROPÄISCHE PATENTSCHRIFT

(11) **EP 0 785 373 B1**
(45) Veröffentlichungstag und Bekanntmachung des Hinweises auf die Patenterteilung: **28.02.2001**
(21) Anmeldenummer: 96119785.2
(22) Anmeldetag: 10.12.1996
(51) Int. Cl.: F16F 15/36, F04B 39/00, F02B 75/36, F01B 19/02

(54) **Membranpumpe mit wenigstens einem Hubkolben**
Diaphragm pump with at least one reciprocating piston
Pompe à membrane avec au moins une piston alternatif

(30) Priorität: 19.01.1996 DE 19601839
(43) Veröffentlichungstag der Anmeldung: 23.07.1997
(73) Patentinhaber: KNF Neuberger GmbH, D-79112 Freiburg (DE)
(72) Erfinder: Riedlinger, Heinz, 28211 Bremen (DE)
(74) Vertreter: Schmitt, Hans, Dipl.-Ing.

(56) Entgegenhaltungen:
- EP-A- 0 434 270
- WO-A-93/23687
- US-A- 4 836 755

## Beschreibung

Die Erfindung betrifft eine Membranpumpe mit wenigstens einer Membrane und einem an dieser befestigten Hubkolben, an dem ein Pleuel angreift, welches seinerseits an dem dem Hubkolben abgewandten Ende durch einen Exzenter oder eine Kurbelkröpfung beaufschlagt und angetrieben ist, bei welcher Membranpumpe die rotierenden und wenigstens ein Teil der oszillierenden Massen durch wenigstens ein an ihnen fest installiertes und sich mit ihnen synchron bewegendes Gegengewicht oder eine Masse ausgeglichen sind.

Membranpumpen sind in vielfältiger Form und Größe bekannt. Die durch die Kurbelkröpfung oder den Exzenter und die sonstigen außermittig und quer zur Rotation bewegbaren Massen, also sowohl die rotierenden als auch die oszillierenden Massen werden dabei durch festinstallierte, sich synchron mitbewegende Gegenmassen ausgeglichen.

Obwohl ein solcher Massenausgleich mit großer Sorgfalt durchgeführt wird, lassen sich Vibrationen nicht immer ausschließen. Vor allem können bei Membranpumpen veränderliche Kräfte durch das jeweilige Fördermedium auftreten und zwar je nach auftretendem Gegendruck oder auch je nach Fördermenge und/oder Drehzahl der Membranpumpe. Wegen der Veränderung solcher Gegenkräfte werden diese Vibrationen hingenommen und allenfalls mittels Dämpfungskörpern gemildert.

Durch die Membrane entstehen dabei bei Membranpumpen gegenüber sonstigen Kolbenmaschinen, beispielsweise gegenüber einer Kolbenmaschine gemäß WO 93/23 687, noch besondere Verhältnisse, weil die Kolbenbewegung durch die Membrane gewissermaßen behindert und in jedem Falle beeinflußt wird. Dabei werden die Membranbewegungen nicht nur durch das Pleuel, sondern auch durch unter Umständen schwankende oder verschiedene Drücke einerseits und durch schwankende oder verschiedene Unterdrücke andererseits beeinflußt, was über das Pleuel wieder zu Reaktionskräften und damit zu zusätzlichen, nicht vorhersehbaren "Unwuchten" führt. Bei Membranpumpen üblicher Drehzahlen und vor allem beim Pumpen oder Saugen eines gasförmigen Mediums können sich die Verhältnisse sehr schnell ändern, so daß diese nicht vorhersehbaren Unwuchten auch zusätzlich noch sehr schnell ihre Größe ändern können.

In der WO 93/23 687 wird für einen Massenausgleich vorgesehen, daß erste und zweite ringförmige Hohlräume konzentrisch zueinander vorgesehen sind und in jedem dieser Hohlräume jeweils frei bewegliche gleich große Gewichte angeordnet sind, wobei aber die Gewichte des ersten Hohlraumes eine andere Größe als die des zweiten Hohlraumes haben. Diese Anordnung wird unter anderem für das Auswuchten einer Kolbenmaschine beschrieben.

Der Erfindung liegt deshalb die Aufgabe zugrunde, eine Membranpumpe der eingangs genannten Art zu schaffen, bei welcher sich ändernde Kräfte, vor allem durch das Fördermedium an der Membrane auftretende Reaktionskräfte weitestgehend selbsttätig ausgeglichen werden können. Dabei soll dieser Ausgleich solcher Kräfte schnell und feinfühlig und auch beim oder kurz nach dem Anlaufen der Membranpumpe erreichbar sein.

Zur Lösung dieser Aufgabe ist die eingangs genannte Membranpumpe dadurch gekennzeichnet, daß konzentrisch zu der Rotationsachse, um die der Exzenter oder die Kurbelkröpfung während des Betriebes der Membranpumpe umlaufen, ein ringförmiger Hohlraum innerhalb eines mitrotierenden Gehäuses oder Gehäuseteiles angeordnet ist, daß in diesem Hohlraum wenigstens **drei** Rollkörper angeordnet sind, die an der Innenseite des Außenumfanges des Hohlraumes frei abrollbar sind, daß das Innere des ringförmigen Hohlraumes bis auf die Rollkörper leer und flüssigkeitsfrei ist und daß die radiale Breite des ringförmigen Hohlraumes den in dieser Richtung orientierten Durchmesser der Rollkörper geringfügig übertrifft derart, daß die beim Anlaufen miteinander in Kontakt stehenden Rollkörper durch die beim Anlaufen vorhandene Unwucht zwischen der äußeren und der inneren Begrenzung oder Wand des ringförmigen Hohlraumes hin- und herbewegbar sind derart, daß der mittlere der drei an der äußeren radialen Begrenzung oder Wand anliegenden Rollkörper durch die beiden benachbarten Rollkörper von der äußeren radialen Begrenzung oder Wand abhebt, und daß dann die Rollkörper aufgrund einer gleitenden Reibung zwischen ihnen und den radialen Begrenzungen des ringförmigen Hohlraumes beim weiteren Anlaufen in Umfangsrichtung mitnehmbar sind.

In überraschender Weise wird also der konventionelle Massenausgleich einer solchen Membranpumpe mit einer automatischen Auswuchteinheit kombiniert, die dabei nur auf sich ändernde Gas- oder sonstige Medium-Kräfte abgestimmt sein muß.

Die Erfindung sieht also die Verwendung des Prinzips eines Unwuchtausgleiches mit Hilfe von in einem ringförmigen Hohlraum umlaufenden Rollkörpern bei Membranpumpen vor, um dabei durch die Förderung eines Mediums oder gegebenenfalls auch den umgekehrten Einfluß eines Mediums auftretende, in der Regel veränderliche Kräfte automatisch wenigstens weitgehend auszugleichen. Da die zum Massenausgleich für den Exzenter oder die Kurbelkröpfung und das Pleuel oder dergleichen notwendigen Massen fest installiert werden, brauchen für den selbstregulierenden Ausgleich der veränderlichen Kräfte oder Gegenkräfte nur relativ geringe Massen eingesetzt zu werden. Entsprechend klein und leicht können die Rollkörper sein, so daß diese schon bei geringen Unwuchten oder auszugleichenden Gegenkräften innerhalb des ringförmigen Hohlraumes zu wandern beginnen, bis sie am Ort des optimalen Massenausgleiches angelangt sind. Somit ergibt sich ein besonders exakter und feinfühliger Massenausgleich, weil über dieses Prinzip nicht sämtliche dynamischen Kräfte, sondern nur die von dem Fördermedium herrührenden Kräfte und daraus resultierende Unwuchten und Vibrationen durch die Rollkörper ausgeglichen werden müssen.

Da das innere des ringförmigen Hohlraumes bis auf die Rollkörper leer und flüssigkeitsfrei ist, ergibt sich beim Abrollen der Rollkörper ein entsprechend geringer Widerstand, was zu einer entsprechend feinfühligen und schnellen Reaktion bei sich ändernden Kräften führt. Zwar sind schon automatische Auswuchtvorrichtungen bekannt, bei denen die Rollkörper mit einem Öl zusammen in einem Hohlraum angeordnet sind, jedoch führt dies zu einem entsprechend trägen System, weil der Widerstand der Flüssigkeit überwunden werden muß, so daß dies für ein schnellen Ausgleichen von wechselnden Gaskräften nicht geeignet wäre.

Die Wahl der radialen Breite des ringförmigen Hohlraumes nur geringfügig größer als die der Rollkörper ist vor allem beim Anlaufen der Membranpumpe von großer Wichtigkeit und Wirksamkeit. Im ersten Augenblick kommt es nämlich beim Anlaufen zunächst nicht zu einem Abrollvorgang, sondern es entstehen gleitende Reibungen, so daß die Rollkörper auch aufeinander Druckkräfte ausüben. Somit kann ein im unteren Bereich des Hohlraumes liegender Rollkörper den ihm benachbarten Rollkörper aufgrund dieser Reibung und der Massenträgheit etwas verdrängen und dabei auch radial anheben, so daß er mit der Innenseite des Hohlraumes in Verbindung kommt. Da das radiale Maß des Hohlraumes das der Rollkörper nur wenig übertrifft, genügt bereits eine ganz geringfügige entsprechende Reaktionsbewegung eines Rollkörpers radial nach innen, wodurch dann aber die Rollkörper insgesamt in Drehrichtung aufgrund der Reibkraft mitgenommen werden, so daß sie sich dann frei am Umfang des Hohlraumes je nach auftretenden Unwuchten verteilen können. Wenn die Maschine mit ihrer Betriebsdrehzahl läuft, ist die Unwucht aufgrund des fest installierten Massenausgleiches derart gering, daß sich die Rollkörper durch die Fliehkraft auf der äußeren Laufbahn, also der in radialer Richtung außenliegenden Wand des Hohlraumes halten und bewegen. Somit können sie sich dort je nach Änderungen von Unwuchten abrollen, weil sie gegenüber der inneren Wand des Hohlraumes einen geringfügigen Abstand haben. Entsprechend gering ist der Widerstand, der sich dieser Rollbewegung entgegensetzt, weil auch keine Flüssigkeitsfüllung in dem Hohlraum vorhanden ist, so daß bei durch unterschiedliche Gegenkräfte entstehenden Änderungen und Vibrationen ein automatischer Ausgleich solcher Unwuchten mit großer Genauigkeit, hoher Feinfühligkeit und schneller Anpassung erfolgt. Versuche haben gezeigt, daß durch diese Kombination von Merkmalen und Maßnahmen der erfindungsgemäßen Lösung ein empfindlicher, exakter und feinfühliger Ausgleich von durch unterschiedliche Gaskräfte auftretenden Vibrationen möglich ist.

Praktisch kann erreicht werden, daß die Rollkörper auch ohne Flüssigkeitsfüllung des Hohlkörpers schon beim Anlaufen der Membranpumpe mitgenommen werden, obwohl sie aufgrund der geringen Reibung gegenüber der Laufbahn und aufgrund ihres Gewichtes eigentlich an der tiefsten Stelle der Laufbahn bleiben würden. Dies gilt vor allem dann, wenn die Rotationsachse für das den ringförmigen Hohlraum aufweisende Gehäuse in Gebrauchsstellung horizontal angeordnet ist. Das vorstehend beschriebene "Gedränge" der Rollkörper innerhalb des ihre Abmessung nur geringfügig übertreffenden Hohlraumes führt zu einer gewissen gegenseitigen "Verklemmung", durch welche sie beim Anlaufen dennoch mitgenommen werden.

Zweckmäßig ist es, wenn der ringförmige Hohlraum als kreisförmige Nut ausgebildet ist, die an ihrer offenen Seite durch einen lösbaren Deckel verschlossen ist. Entsprechend einfach ist die Montage und insbesondere auch das Einführen der Rollkörper in diese Nut. Ferner läßt sich so der ringförmige Hohlraum einerseits sehr einfach, andererseits aber auch sehr exakt fertigen. Wichtig ist nämlich, daß der Bewegung der Rollkörper möglichst wenig Widerstände entgegenstehen, so daß eine entsprechend präzise Rollbahn vorteilhaft ist, wobei außerdem die Laufbahnen und die Rollkörper für möglichst geringe Widerstände gehärtet sein können.

Die radiale Breite des ringförmigen Hohlraumes kann den größten Durchmesser der Rollkörper um etwa ein halbes Prozent bis zwei Prozent, vorzugsweise um etwa ein Prozent bis eineinhalb Prozent, insbesondere weniger als ein zehntel Millimeter bis etwa ein viertel Millimeter übertreffen.

Dies stellt besonders günstige Maßverhältnisse hinsichtlich der erfindungsgemäßen Lösung dar, wonach nämlich die radiale Breite des ringförmigen Hohlraumes den in dieser Richtung orientierten Durchmesser der Rollkörper geringfügig übertrifft.

Der Querschnitt der als Rollbahn dienenden, außenliegenden Wand des Hohlraumes kann achsparallel und rechtwinklig zum Durchmesser geradlinig angeordnet sein, also zumindest die auf dem größeren Durchmesser liegende Innenseite des ringförmigen Hohlraumes kann einen Hohlzylinder bilden. Dies ist besonders einfach herstellbar, weil gegenüber einer beispielsweise etwas konvexen Gestaltung dieser Wand des Hohlraumes oder dieser Laufbahn keine Hinterschneidung gebildet werden muß. Darüber hinaus erleichtert dies das Einfüllen der Rollkörper.

Besonders günstig ist es dabei, wenn die auf einem kleineren Durchmesser angeordnete Wand des Hohlraumes in gleicher Weise wie die außenliegende Wand geradlinig und somit parallel zu der außenliegenden Wand ausgebildet ist. Entsprechend genau können die Rollkörper auf den am gesamten Umfang und auch in axialer Richtung gleichbleibenden radialen Abstand dieser Begrenzungen des Hohlraumes abgestimmt sein und daß Einfüllen oder Auswechseln oder Ergänzen der Rollkörper ist entsprechend einfach. Gegenüber einem ringförmigen Hohlraum, dessen beide radiale Begrenzungen jeweils voneinander weggerichtet konvex ausgebildet sind, kann eine spezielle Füllöffnung vermieden werden.

Eine bevorzugte Ausführungsform kann darin bestehen, daß die Rollkörper Kugeln sind. Kugeln lassen sich sehr exakt und genau herstellen und können in einem ringförmigen Hohlraum während des Betriebes besonders gut umlaufen, ohne daß die Gefahr einer Verkantung besteht. Beim ersten Anlaufen hingegen kann eine solche Verkantung aufgrund der gewählten Abmessungsverhältnisse dazu nutzbar gemacht werden, die Kugeln innerhalb des Hohlraumes zu verteilen.

Sowohl für den Massenausgleich als auch für das erste Anlaufen und das dabei zunächst kurzzeitig gewollte "Verkanten" ist es günstig, wenn wenigstens drei oder vier, insbesondere fünf Rollkörper oder Kugeln in dem ringförmigen Hohlraum angeordnet sind, die vorzugsweise die gleiche Abmessung und insbesondere die gleiche Masse haben. Versuche haben gezeigt, daß dadurch vor allem bei Membranpumpen, bei denen das Pleuel eine auf- und abwärts gerichtete Bewegung durchführt, ein feinfühliger Ausgleich von wechselnden Gaskräften möglich ist, wobei wiederum vorteilhaft ist, daß keine Flüssigkeit in dem ringförmigen Hohlraum angeordnet ist, die den Widerstand erhöhen würde, weil sie mit verschoben werden müßte.

Nachstehend ist ein Ausführungsbeispiel der Erfindung anhand der Zeichnung näher beschrieben. Es zeigt in schematisierter Darstellung:
- Fig. 1: einen senkrechten Schnitt durch das Gehäuse einer Membranpumpe mit einer Ansicht eines konzentrisch angeordneten Gehäuses mit einer Ringnut, in welcher für einen automatischen Ausgleich wechselnder Gaskräfte fünf als Kugeln ausgebildete Rollkörper angeordnet sind, wobei sich diese Membranpumpe im Stillstand befindet,
- Fig. 2: eine der Fig. 1 entsprechende Darstellung während des Betriebes, bei dem sich die fünf als Rollkörper dienenden Kugeln zum Ausgleich einer bestimmten Gaskraft innerhalb ihres ringförmigen Hohlraumes verteilt haben und die durch diese Gaskraft entstehende Unwucht automatisch ausgleichen,
- Fig. 3: einen gegenüber den Darstellungen in Fig. 1 und 2 um 90° gedrehten vertikalen Schnitt mit der Lagerung des Pleuels und der Exzenterachse sowie einem Gehäuse mit dem ringförmigen Hohlraum für die darin frei abrollbaren Kugeln,
- Fig. 4: in vergrößerter schematisierter Darstellung drei aneinanderliegende Rollkörper oder Kugeln während des Anlaufens der Membranpumpe und ihres als Ringnut ausgebildeten Hohlraumes sowie
- Fig. 5: eine der Figur 4 entsprechende Darstellung während des Normalbetriebes der Membranpumpe, das heißt nach der ersten Anlaufphase und nach dem dadurch erfolgenden Verteilen der Kugeln oder Rollkörper innerhalb des Hohlraumes.

Eine im ganzen mit 1 bezeichnete Membranpumpe hat in bekannter Weise einen Hubkolben 2, an dem eine in dem Gehäuse 3 eingespannte Membrane 4 in bekannter Weise befestigt ist.

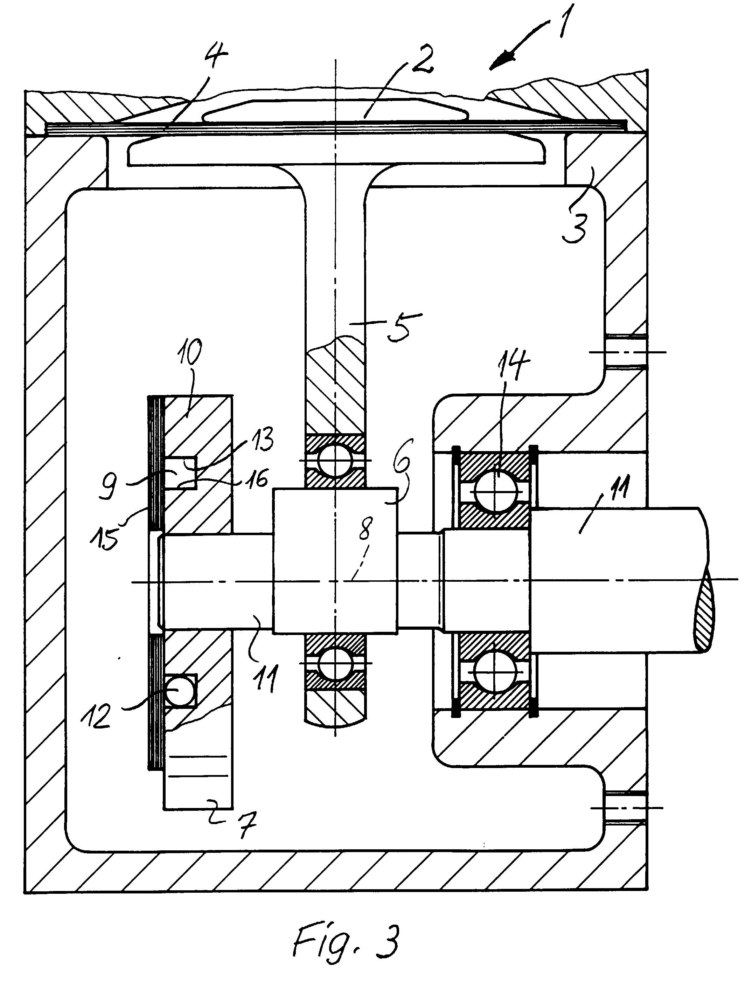

An dem Hubkolben 2 greift ein Pleuel 5 an, welches seinerseits an dem dem Hubkolben 2 abgewandten Ende durch einen Exzenter 6 (vergleiche Fig. 3) beaufschlagt und angetrieben ist. Statt des Exzenters 6 könnte auch eine Kurbelkröpfung vorgesehen sein.

Die vorgegebenen rotierenden und wenigstens ein Teil der vorgegebenen oszillierenden Massen sind durch ein festinstalliertes, sich synchron mitbewegendes Gegengewicht 7 ausgeglichen.

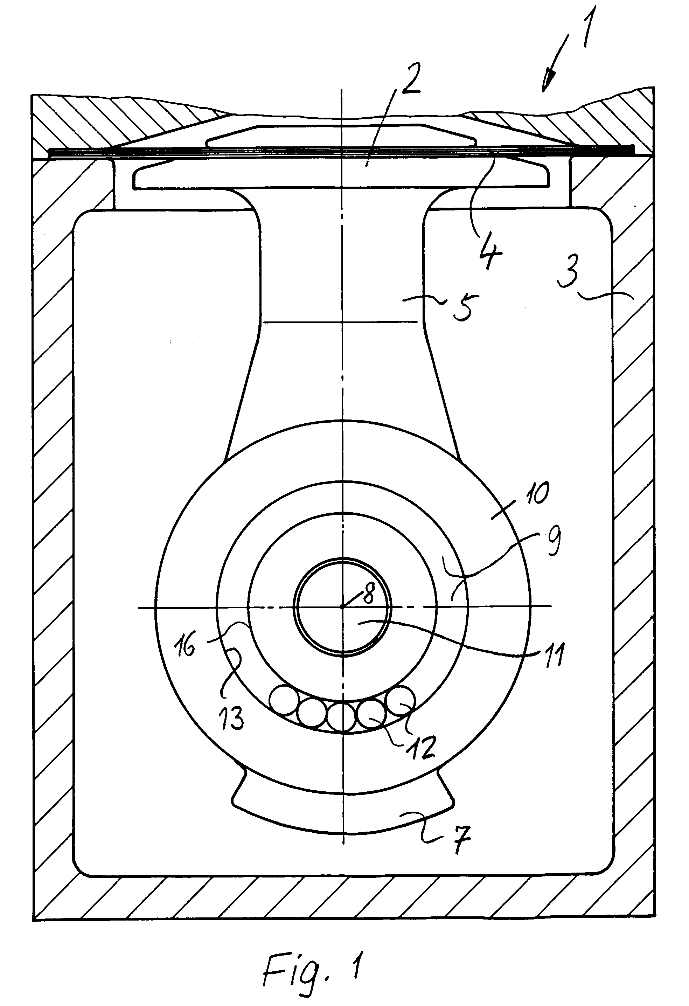

Vor allem bei gleichzeitiger Betrachtung der Fig. 1 und 3 erkennt man, daß konzentrisch zu der Rotationsachse 8, um die der Exzenter 6 - oder gegebenenfalls eine Kurbelkröpfung - während des Betriebes der Membranpumpe 1 umläuft, ein ringförmiger Hohlraum 9 innerhalb eines mitrotierenden Gehäuses 10 angeordnet ist, welches Gehäuse 10 auf der den Exzenter 6 aufweisenden Welle 11 fliegend gelagert ist. In diesem ringförmigen Hohlraum 9 sind mehrere Rollkörper 12 angeordnet, die an der Innenseite 13 des Außenumfanges des Hohlraumes 9, im folgenden auch Außenseite 13 genannt, frei abrollbar sind.

Dabei erkennt man in Fig. 3, daß das mitrotierende Gehäuse 10 an einem freien Ende der Welle 11 benachbart zu dem Exzenter 6 und der Lagerung des Pleuels 5 auf diesem Exzenter angeordnet ist, während auf der diesem Gehäuse 10 abgewandten Seite die Lagerung, im Ausführungsbeispiel ein Wälzlager 14, für diese Welle 11 vorgesehen ist.

Bei gleichzeitiger Betrachtung der Figuren wird deutlich, daß der ringförmige Hohlraum 9 als kreisförmige Nut ausgebildet ist, die an ihrer offenen Seite durch einen lösbaren Deckel 15 verschlossen ist. Die radiale Breite des ringförmigen Hohlraumes 9 entspricht dabei etwa dem größten Durchmesser der Rollkörper 12, übertrifft diesen aber so geringfügig, daß es in der Zeichnung nicht sichtbar ist. Beispielsweise übertrifft die radiale Breite des ringförmigen Hohlraumes 9 den größten Durchmesser der Rollkörper 12 um etwa ein halbes Prozent bis zwei Prozent, vorzugsweise um etwa um ein Prozent bis eineinhalb Prozent dieses Durchmessers. Dies kann in der Praxis weniger als ein zehntel Millimeter bis etwa ein viertel Millimeter bedeuten, worum die Breite der den ringförmigen Hohlraum 9 bildenden Nut den Durchmesser der Rollkörper übertrifft.

Dadurch wird erreicht, daß beim Anlaufen der Membranpumpe 1 die zunächst gemäß Fig. 1 alle an einer tiefsten Stelle des ringförmigen Hohlraumes 9 angeordneten Rollkörper 12 durch die daraus resultierende Unwucht innerhalb der relativ engen Nut hin und her geschleudert und bewegt werden, sich also nicht in eine einem Abrollen entsprechende Drehbewegung begeben können, weil sie abwechselnd an der Innenseite 16 und der Außenseite 13 des ringförmigen Hohlraumes 9 Kontakt erhalten. Es entsteht also während der Anlauf-Phase eine Gleitreibung, so daß die Rollkörper 12 am Umfang des Hohlraumes 9 mehr oder weniger gleichmäßig verteilt werden.

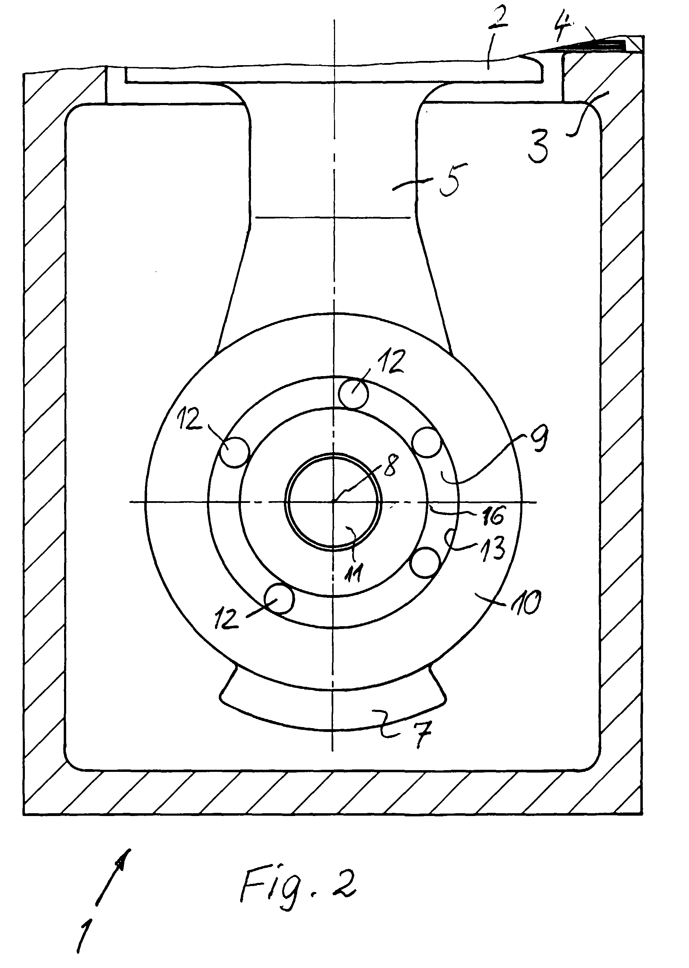

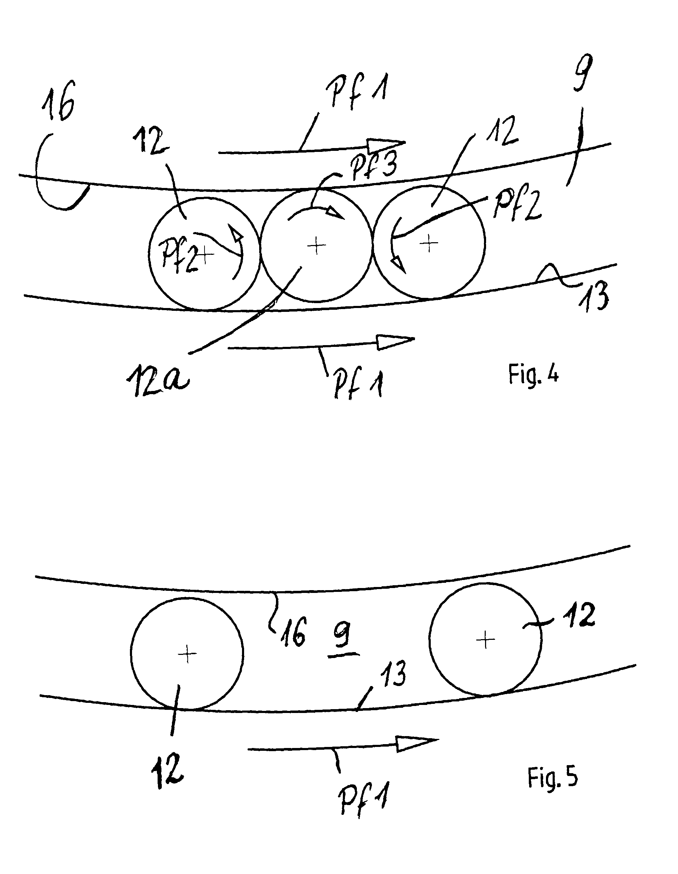

In Figur 4 ist schematisiert der Anlaufvorgang dargestellt. Wenn die Membranpumpe 1 und damit ihr Gehäuse 10 in Richtung der Pfeile Pf1 anläuft, werden aufgrund der Reaktionskräfte die an der Außenseite 13 des ringförmigen Hohlraumes 9 an dessen tiefster Stelle anliegenden Rollkörper 12 oder Kugeln aufgrund ihrer Reibung in eine entsprechende Gegendrehung gemäß den Pfeilen Pf2 versetzt, was aber nur für die beiden jeweils außenseitig liegenden Rollkörper 12 zutrifft, während ein zwischen ihnen befindlicher Rollkörper 12a aufgrund seiner Reibung gegenüber den beiden ihn beidseits berührenden Rollkörpern 12 diesen gegenüber entgegengesetzt in Drehung versetzt wird, was durch den Pfeil Pf3 angedeutet ist. Dies führt gleichzeitig dazu, daß er von den beiden ihn berührenden Rollkörpern 12 in radialer Richtung angehoben wird und dadurch in Kontakt mit der Innenseite 16 des nutenförmigen Hohlraumes 9 gelangt, so daß die Rollkörper 12 und 12a sich gegenseitig in dem Hohlraum 9 verkeilen, wodurch die ganze Gruppe von Rollkörpern 12 in Drehrichtung soweit mitgenommen wird, daß sich die Rollkörper im weiteren Verlauf auch durch die Schwerkraft und durch die Dynamik des Anlaufvorganges voneinander trennen und je nach Unwucht ihre Lage innerhalb des nutförmigen Hohlraumes 9 einnehmen, wie es in Figur 2 und 5 angedeutet ist. In Figur 5 sind von den drei in Figur 4 dargestellten Rollkörpern 12 nur zwei zu sehen, weil der dritte Rollkörper seinerseits einen entsprechend großen Abstand von den zu sehenden Rollkörpern 12 einnimmt. Die Rollkörper 12 können nun aufgrund der Fliehkraft gehalten werden, so daß sie je nach Unwucht ihre erforderliche Lage einnehmen.

Ist die Betriebsdrehzahl erreicht, sind also die Rollkörper 12 etwa gemäß Fig. 2 und 5 verteilt und können nun bei geringfügigen Schwankungen der auftretenden Gaskräfte und den daraus resultierenden Unwuchten sehr feinfühlig in die jeweilige Position rollen, in der sie diese Unwucht automatisch ausgleichen, weil sie nun aufgrund der Zentrifugalkraft nur noch an der Außenseite 13 des Hohlraumes 9 anliegen und aufgrund ihres etwas geringeren Durchmessers gegenüber der Breite des Hohlraumes 9 nicht mehr mit der inneren Seite 16 dieses Hohlraumes 9 in Berührung kommen, also ihre Abrollbewegung nicht mehr gebremst wird.

Dabei ist hilfreich, daß das Innere des ringförmigen Hohlraumes 9 bis auf die Rollkörper 12 leer und flüssigkeitsfrei ist - natürlich von der üblichen Atmosphärenluft abgesehen. Es braucht also bei einer Änderung der Position der Rollkörper 12 aufgrund sich ändernder Kräfte und daraus resultierender Unwuchten nicht auch noch ein relativ träger Flüssigkeitsanteil mitbewegt zu werden. Entsprechend exakt und schnell kann das gesamte System auf sich ändernde Kräfte reagieren, zumal die gleichbleibenden Massenkräfte von vorneherein durch das Gegengewicht 7 weitestgehend ausgeglichen sind, also nur noch kleine zusätzliche, aber sich ändernde Kräfte berücksichtigt werden müssen. Zusätzlich können aber auch Ungenauigkeiten des Gegengewichtes 7 ausgeglichen werden.

In Fig. 3 erkennt man, daß der Querschnitt der als Rollbahn dienenden Außenseite 13, also der außenliegenden Wand des Hohlraumes 9 achsparallel und rechtwinklig zum Durchmesser geradlinig ausgebildet und angeordnet ist, also die auf dem größeren Durchmesser liegende Wand 13 des ringförmigen Hohlraumes 9 einen Hohlzylinder bildet. Auch die auf einem kleineren Durchmesser angeordnete innere Wand 16 des Hohlraumes 9 ist in gleicher Weise wie diese außenliegende Wand 13 geradlinig und somit parallel zu der außenliegenden Wand 13 ausgebildet, so daß die radiale Breite des ringförmigen Hohlraumes 9 in axialer Richtung gleich bleibt. Somit können die Rollkörper 12 bei geöffnetem Deckel 15 problemlos und ohne eine spezielle Einfüllöffnung in den Hohlraum 9 eingelegt werden.

Da die Rollkörper 12 bevorzugt Kugeln sind, wie es sich bei der gleichmäßigen Betrachtung der Fig. 1 und 3 oder 2 und 3 ergibt, besteht während des Betriebes keine Gefahr eines Verkantens, wie sie evtl. mit walzenförmigen Rollkörpern bestehen könnte.

Dabei sind im Ausführungsbeispiel fünf Rollkörper 12 in Form von Kugeln in dem ringförmigen Hohlraum 9 angeordnet, die alle die gleiche Abmessung und die gleiche Masse haben, wobei aber auch evtl. weniger oder mehr Kugeln vorgesehen sein könnten.

Die Rotationsachse 8 für das den ringförmigen Hohlraum 9 aufweisende Gehäuse 10 ist gemäß Fig. 3 horizontal angeordnet, wobei das Pleuel 5 gemäß Fig. 1 eine weitgehend vertikale Orientierung hat. Es wäre aber auch möglich, daß Fig. 3 eine Draufsicht darstellt, also das Pleuel auch bei horizontaler Rotationsachse 8 seinerseits in Gebrauchsstellung horizontal oder liegend angeordnet ist. Auch könnte die Rotationsachse 8 in Gebrauchsstellung vertikal verlaufen.

In zweckmäßiger Weise ist das festinstallierte Gegengewicht 7 an dem den ringförmigen Hohlraum 9 enthaltenden Gehäuse 10 angeordnet, so daß dieses Gehäuse 10 eine zusätzliche Funktion erhält, indem es auch diese für die großen Massen und deren Ausgleich vorgegebene Gegenmasse aufnimmt. Dabei ist dieses Gegengewicht 7 selbstverständlich der Exzentrizität des Exzenters 8 und der Orientierung des Pleuels 5 entgegengesetzt, befindet sich also gemäß Fig. 1 in Ausgangsstellung an der tiefsten Stelle.

Insgesamt ergibt sich eine Membranpumpe 1, bei der die Unwucht aufgrund des festen Massenausgleiches mit Hilfe des Gegengewichtes 7 bei voller Drehzahl so gering ist, daß sich die Rollkörper 12 oder Kugeln durch die Fliehkraft an der äußeren Wand 13 frei abrollend bewegen können, wobei der Widerstand sehr gering ist, so daß ein schneller und exakter selbstregulierender Massenausgleich von während des Betriebes auftretenden, veränderlichen Gaskräften ermöglicht wird, gleichzeitig der konstruktive Aufwand aber verhältnismäßig gering ist. Störende Vibrationen aufgrund veränderliche Medium- oder Gaskräfte können somit vermindert oder weitgehend vermieden werden.

Die Membranpumpe 1 hat einen Hubkolben 2, der mit Hilfe eines Pleuels 5 betätigt wird und dadurch die an ihm befestigte, im Pumpengehäuse 3 eingespannte Membrane 4 bewegt. Das Pleuel 5 wird seinerseits an dem dem Hubkolben 2 abgewandten Ende durch einen Exzenter 6 oder eine Kurbelkröpfung der Antriebswelle 11 beaufschlagt und angetrieben. Die rotierenden und wenigstens ein Teil der oszillierenden Massen ist dabei durch wenigstens ein festinstalliertes und sich mit ihnen synchron bewegendes Gegengewicht 7 ausgeglichen. Für den selbsttätigen Ausgleich sich verändernder Unwuchten aufgrund veränderlicher Gaskräfte oder Mediumkräfte ist ein sich selbst einstellendes System von Rollkörpern 12 in einem konzentrisch zu der Rotationsachse angeordneten ringfömigen leeren Hohlraum 9 innerhalb eines mitrotierenden Gehäuses 10 vorgesehen. Dabei sind in diesem Hohlraum 9 Rollkörper 12, bevorzugt Kugeln, angeordnet, die an der Innenseite 13 des Außenumfanges, also an der radial am weitesten außenliegenden Wand des Hohlraumes 9 frei abrollbar sind und schon bei geringen Unwuchten zu wandern beginnen, bis sie am Ort des optimalen Massenausgleiches angelangt sind.

## Patentansprüche

1. Membranpumpe (1) mit wenigstens einer Membrane (4) und einem an dieser befestigten Hubkolben (2), an dem ein Pleuel (5) angreift, welches seinerseits an dem dem Hubkolben (2) abgewandten Ende durch einen Exzenter (6) oder eine Kurbelkröpfung beaufschlagt und angetrieben ist, bei welcher Membranpumpe (1) die rotierenden und wenigstens ein Teil der oszillierenden Massen durch wenigstens ein an ihnen fest installiertes und sich mit ihnen synchron bewegendes Gegengewicht (7) oder eine Masse ausgeglichen sind, **dadurch gekennzeichnet,** daß konzentrisch zu der Rotationsachse (8), um die der Exzenter (6) oder die Kurbelkröpfung während des Betriebes der Membranpumpe (1) umlaufen, ein ringförmiger Hohlraum (9) innerhalb eines mitrotierenden Gehäuses (10) oder Gehäuseteiles angeordnet ist, daß in diesem Hohlraum (9) wenigstens drei Rollkörper (12, 12a) angeordnet sind, die an der Innenseite (13) des Außenumfanges des Hohlraumes (9) frei abrollbar sind, daß das Innere des Hohlraumes (9) bis auf die Rollkörper (12, 12a) leer und flüssigkeitsfrei ist, und daß die radiale Breite des ringförmigen Hohlraumes (9) den in dieser Richtung orientierten Durchmesser des Rollkörper (12, 12a) geringfügig übertrifft derart, daß die beim Anlaufen miteinander in Kontakt stehenden Rollkörper (12, 12a) durch die beim Anlaufen vorhandene Unwucht zwischen der äußeren und der inneren Begrenzung oder Wand des ringförmigen Hohlraumes (9) hin- und herbewegbar sind, derart, daß der mittlere (12a) der drei an der äußeren radialen Begrenzung oder Wand anliegenden Rollkörper (12, 12a) durch die beiden benachbarten Rollkörper (12) von der äußeren radialen Begrenzung oder Wand abhebt und daß dann die Rollkörper (12, 12a) aufgrund einer gleitenden Reibung zwischen ihnen und den radialen Begrenzungen des ringförmigen Hohlraumes (9) beim weiteren Anlaufen in Umfangsrichtung mitnehmbar sind.

2. Membranpumpe nach Anspruch 1, dadurch gekennzeichnet, daß der ringförmige Hohlraum (9) als kreisförmige Nut ausgebildet ist, die an ihrer offenen Seite durch einen lösbaren Deckel (15) verschlossen ist.

3. Membranpumpe nach Anspruch 1 oder 2, dadurch gekennzeichnet, daß die radiale Breite des ringförmigen Hohlraumes (9) den größten Durchmesser der Rollkörper (12) um etwa ein halbes bis zwei Prozent, vorzugsweise um etwa ein Prozent bis eineinhalb Prozent, insbesondere weniger als ein Zehntel Millimeter bis etwa ein Viertel Millimeter übertrifft.

4. Membranpumpe nach einem der Ansprüche 1 bis 3, dadurch gekennzeichnet, daß der Querschnitt der als Rollbahn dienenden, außenliegenden Wand des Hohlraumes (9) achsparallel und rechtwinklig zum Durchmesser geradlinig angeordnet ist, also zumindest die auf dem größeren Durchmesser liegende Wand (13) des ringförmigen Hohlraumes (9) einen Hohlzylinder bildet.

5. Membranpumpe nach Anspruch 4, dadurch gekennzeichnet, daß die auf einem kleineren Durchmesser angeordnete Wand (16) des Hohlraumes (9) in gleicher Weise wie die außenliegende Wand (13) geradlinig und somit parallel zu der außenliegenden Wand (13) ausgebildet ist.

6. Membranpumpe nach Anspruch 1 bis 5, dadurch gekennzeichnet, daß die Rollkörper (12) Kugeln sind.

7. Membranpumpe nach einem der Ansprüche 1 bis 6, dadurch gekennzeichnet, daß wenigstens drei oder vier, insbesondere fünf Rollkörper (12) oder Kugeln in dem ringförmigen Hohlraum (9) angeordnet sind, die vorzugsweise die gleiche Abmessung und insbesondere die gleiche Masse haben.

8. Membranpumpe nach einem der vorstehenden Ansprüche, dadurch gekennzeichnet, daß die Rotationsachse (8) für das den ringförmigen Hohlraum (9) aufweisende Gehäuse (10) in Gebrauchsstellung horizontal angeordnet ist.

9. Membranpumpe nach einem der Ansprüche 1 bis 8, dadurch gekennzeichnet, daß das festinstallierte Gegengewicht (7) an dem den ringförmigen Hohlraum (9) enthaltenden Gehäuse (10) angeordnet ist und insbesondere dem exzentrischen Teil des Exzenters (6) und/oder dem Pleuel (5) abgewandt angeordnet ist.

10. Membranpumpe nach einem der Ansprüche 1 bis 9, dadurch gekennzeichnet, daß zumindest die als Rollbahn dienende, außenliegende Wand (13) des Hohlraumes (9) geglättet oder poliert ist.

11. Membranpumpe nach Anspruch 10, dadurch gekennzeichnet, daß die Wand (13) durch Präzisionsdrehen und/oder eine Beschichtung geglättet ist.

12. Membranpumpe nach einem der Ansprüche 1 bis 11, dadurch gekennzeichnet, daß das den Hohlraum (9) aufweisende Gehäuse (10) oder zumindest die die äußere Rollbahn bildende Wand (13) aus korrosionsfestem Werkstoff, insbesondere aus Edelstahl besteht und/oder damit beschichtet ist und/oder eine korrosionsbeständige Schicht, zum Beispiel eine Hartverchromung aufweist.

13. Membranpumpe nach einem der vorstehenden Ansprüche, dadurch gekennzeichnet, daß die Oberfläche zumindest der Innenseite oder Wand (13) des Außenumfanges des Hohlraumes (9) derart geglättet oder beschichtet ist, daß die Rauhtiefe kleiner oder gleich 1,6 µm ist.

## Claims

1. Diaphragm pump (1) having at least one diaphragm (4) and a lifting cylinder (2) attached thereto on which a piston rod (5) acts, which in turn is acted upon and driven by an eccentric (6) or a crank at the end remote from the lifting cylinder (2), whilst in said diaphragm pump (1) the rotating masses and at least some of the oscillating masses are balanced by at least one counterweight (7) or mass fixedly installed thereon and moving synchronously therewith, characterised in that an annular cavity (9) is disposed within a co-rotating housing (10) or housing part, concentrically with the rotational axis (8) about which the eccentric (6) or the crank rotates during operation of the diaphragm pump (1), in that in this cavity (9) are disposed at least three rolling members (12, 12a) which are able to roll freely on the inside (13) of the outer circumference of the cavity (9), in that the interior of the cavity (9) is empty apart from the rolling members (12, 12a) and free from liquid, and in that the radial width of the annular cavity (9) slightly exceeds the diameter of the rolling member (12, 12a) oriented in this direction, so that the rolling members (12, 12a) which are in contact with one another during start-up can be moved back and forth by the imbalance existing between the outer and inner boundary or wall of the annular cavity (9) during start-up, with the result that the middle one (12a) of the three rolling members (12, 12a) abutting on the outer radial boundary or wall is lifted away from the outer radial boundary or wall by the two adjacent rolling members (12), and the rolling members (12, 12a) can then be carried along in the circumferential direction as a result of sliding friction between them and the radial boundaries of the annular cavity (9) as start-up continues.

2. Diaphragm pump according to claim 1, characterised in that the annular cavity (9) is constructed as a circular groove which is closed off on its open side by a releasable cover (15).

3. Diaphragm pump according to claim 1 or 2, characterised in that the radial width of the annular cavity (9) exceeds the maximum diameter of the rolling member (12) by about one-half of one percent to two percent, preferably by about one percent to one and a half percent, more particularly by less than one tenth of a millimetre to about a quarter of a millimetre.

4. Diaphragm pump according to one of claims 1 to 3, characterised in that the cross section of the exterior wall of the cavity (9) acting as a roller track is arranged in a straight line axially parallel and at right angles to the diameter, i.e. at least the wall (13) of the annular cavity (9) located on the larger diameter forms a hollow cylinder.

5. Diaphragm pump according to claim 4, characterised in that the wall (16) of the cavity (9) arranged on the smaller diameter is formed in a straight line in the same way as the outer wall (13) and hence parallel to the outer wall (13).

6. Diaphragm pump according to claims 1 to 5, characterised in that the rolling members (12) are balls.

7. Diaphragm pump according to one of claims 1 to 6, characterised in that at least three or four, particularly five rolling members (12) or balls, preferably having the same dimensions and especially the same mass, are arranged in the annular cavity (9).

8. Diaphragm pump according to one of the preceding claims, characterised in that the rotational axis (8) for the housing (10) containing the annular cavity (9) is horizontally disposed in the position of use.

9. Diaphragm pump according to one of claims 1 to 8, characterised in that the fixedly installed counterweight (7) is arranged on the housing (10) containing the annular cavity (9) and in particular is arranged to be remote from the eccentric part of the eccentric (6) and/or the piston rod (5).

10. Diaphragm pump according to one of claims 1 to 9, characterised in that at least the exterior wall (13) of the cavity (9), which acts as a roller track, is smooth or polished.

11. Diaphragm pump according to claim 10, characterised in that the wall (13) is smoothed by precision turning and/or by means of a coating.

12. Diaphragm pump according to one of claims 1 to 11, characterised in that the housing (10) containing the cavity (9) or at least the wall (13) forming the outer rolling track consists of corrosion-proof material, particularly stainless steel, and/or is coated therewith and/or has a corrosion-resistant coating, for example hard chromium plating.

13. Diaphragm pump according to one of the preceding claims, characterised in that the surface of at least the interior or wall (13) of the outer periphery of the cavity (9) is smoothed or coated so that the peak-to-valley height is less than or equal to 1.6 µm.

## Revendications

1. Pompe (1) à membrane comprenant au moins une membrane (4) et un piston alternatif (2) fixé à ladite membrane, et avec lequel vient en prise une bielle (5) sollicitée et entraînée à son tour, à l'extrémité tournée à l'opposé du piston alternatif (2), par un excentrique (6) ou un coude de manivelle, pompe (1) à membrane dans laquelle les masses rotatives, et au moins une part des masses oscillantes, sont compensées par au moins un contrepoids (7) ou une masse monté(e) fixe sur lesdites masses, et se mouvant en synchronisme avec ces dernières, caractérisée par le fait qu'une cavité annulaire (9) est ménagée à l'intérieur d'un carter (10) à rotation conjointe, ou d'une partie de carter, concentriquement à l'axe de rotation (8) autour duquel l'excentrique (6) ou le coude de manivelle tourne au cours du fonctionnement de la pompe (1) à membrane ; par le fait que cette cavité (9) loge au moins trois corps de roulement (12, 12a) pouvant rouler librement sur la face interne (13) du pourtour extérieur de ladite cavité (9) ; par le fait que l'espace intérieur de la cavité (9) est vide et exempt de fluide, à l'exception des corps de roulement (12, 12a) ; et par le fait que la largeur radiale de la cavité annulaire (9) excède légèrement le diamètre des corps de roulement (12, 12a), orienté dans cette direction, de façon telle que les corps de roulement (12, 12a), mutuellement en contact lors du démarrage, puissent être animés d'un mouvement alternatif entre les délimitations ou parois externe et interne de la cavité annulaire (9), sous l'effet du balourd présent lors du démarrage, de telle sorte que le corps central (12a), parmi les trois corps de roulement (12, 12a) appliqués contre la délimitation ou paroi radiale externe, se soulève à l'écart de la délimitation ou paroi radiale externe, sous l'action des deux corps de roulement (12) voisins, et que les corps de roulement (12, 12a) puissent être entraînés dans la direction périphérique, en phase ultérieure de démarrage, du fait d'un frottement par glissement s'opérant entre eux et les délimitations radiales de la cavité annulaire (9).

2. Pompe à membrane selon la revendication 1, caractérisée par le fait que la cavité annulaire (9) est réalisée sous la forme d'une saignée circulaire obturée par un couvercle amovible (15) sur son côté ouvert.

3. Pompe à membrane selon la revendication 1 ou 2, caractérisée par le fait que la largeur radiale de la cavité annulaire (9) excède le diamètre maximal des corps de roulement (12) d'environ un demi pour cent à deux pour cent, de préférence d'environ un pour cent à un et demi pour cent, notamment de moins d'un dixième de millimètre à environ un quart de millimètre.

4. Pompe à membrane selon l'une des revendications 1 à 3, caractérisée par le fait que la section transversale de la paroi externe de la cavité (9), servant de piste de roulement, est agencée rectilignement avec parallélisme axial et perpendiculairement au diamètre, c'est-à-dire qu'au moins la paroi (13) de la cavité annulaire (9), qui est située sur le plus fort diamètre, forme un cylindre creux.

5. Pompe à membrane selon la revendication 4, caractérisée par le fait que la paroi (16) de la cavité (9), située sur un diamètre plus petit, est de réalisation rectiligne de la même façon que la paroi externe (13), et est par conséquent parallèle à ladite paroi externe (13).

6. Pompe à membrane selon les revendications 1 à 5, caractérisée par le fait que les corps de roulement (12) sont des billes.

7. Pompe à membrane selon l'une des revendications 1 à 6, caractérisée par le fait que la cavité annulaire (9) renferme au moins trois ou quatre, en particulier cinq corps de roulement (12) ou billes présentant de préférence le même dimensionnement, et notamment la même masse.

8. Pompe à membrane selon l'une des revendications précédentes, caractérisée par le fait que l'axe de rotation (8), affecté au carter (10) muni de la cavité annulaire (9), est disposé horizontalement en position d'utilisation.

9. Pompe à membrane selon l'une des revendications 1 à 8, caractérisée par le fait que le contrepoids (7) monté fixe est disposé sur le carter (10) muni de la cavité annulaire (9), et est notamment disposé en étant tourné à l'opposé de la bielle (5) et/ou de la partie excentrée de l'excentrique (6).

10. Pompe à membrane selon l'une des revendications 1 à 9, caractérisée par le fait qu'au moins la paroi externe (13) de la cavité (9), servant de piste de roulement, est lissée ou polie.

11. Pompe à membrane selon la revendication 10, caractérisée par le fait que la paroi (13) est lissée par tournage de précision et/ou par un revêtement.

12. Pompe à membrane selon l'une des revendications 1 à 11, caractérisée par le fait que le carter (10) muni de la cavité (9), ou au moins la paroi (13) formant la piste externe de roulement, consiste en un matériau résistant à la corrosion, notamment en de l'acier fin, et/ou est revêtu(e) de ce dernier, et/ou présente une couche stable à la corrosion, par exemple un revêtement au chrome dur.

13. Pompe à membrane selon l'une des revendications précédentes, caractérisée par le fait que la surface d'au moins la face interne, ou paroi (13) du pourtour extérieur de la cavité (9), est lissée ou revêtue de façon telle que la profondeur de rugosité soit inférieure ou égale à 1,6 µm.
